(19) Europäisches Patentamt
European Patent Office
Office européen des brevets

(11) **EP 0 726 806 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(21) Anmeldenummer: 95932003.7

(22) Anmeldetag: **07.09.1995**

(51) Int. Cl.$^6$: **B01J 19/08**

(86) Internationale Anmeldenummer:
**PCT/EP95/03513**

(87) Internationale Veröffentlichungsnummer:
**WO 96/07475 (14.03.1996 Gazette 1996/12)**

(54) **VERFAHREN FÜR DIE HERSTELLUNG EINES PULVERS IN EINEM PLASMALICHTBOGEN UND VORRICHTUNG FÜR DIE DURCHFÜHRUNG DES VERFAHRENS**

METHOD OF PREPARING A POWDER IN A PLASMA ARC AND DEVICE FOR CARRYING OUT SAID METHOD

PROCEDE DE FABRICATION D'UNE POUDRE DANS UN JET DE PLASMA ET DISPOSITIF PERMETTANT DE METTRE EN OUVRE LEDIT PROCEDE

(84) Benannte Vertragsstaaten:
**CH DE FR GB IT LI NL**

(30) Priorität: **07.09.1994 FR 9410874**

(43) Veröffentlichungstag der Anmeldung:
**21.08.1996 Patentblatt 1996/34**

(73) Patentinhaber:
**W.C. Heraeus GmbH & Co. KG**
**63450 Hanau (DE)**

(72) Erfinder: **SEROLE, Bernard**
**F-26380 Peyrins (FR)**

(74) Vertreter: **Kühn, Hans-Christian**
**Heraeus Holding GmbH,**
**Stabsstelle Schutzrechte,**
**Heraeusstrasse 12-14**
**63450 Hanau (DE)**

(56) Entgegenhaltungen:
**CH-A- 281 749        DE-C- 916 288**
**FR-A- 378 483         FR-A- 1 560 417**
**FR-A- 2 603 209       GB-A- 959 027**
**US-A- 2 157 498       US-A- 5 196 102**

• **PATENT ABSTRACTS OF JAPAN vol. 11, no. 328 (P-629) 27. Oktober 1987 & JP,A,62 111 373 (RICOH CO. LTD.) 22. Mai 1987**

EP 0 726 806 B1

**Beschreibung**

Die Erfindung betrifft ein Verfahren für die kontinuierliche Herstellung eines Pulvers durch die Reaktion mindestens zweier Reaktionspartner in einem Plasmalichtbogen, bei dem ein erster und ein zweiter Reaktionspartner dem Plasmalichtbogen zugeführt werden, der mittels einer zwischen einer ersten und einer zweiten Elektrode angelegten Spannung aufrechterhalten wird, wobei mindestens der erste Reaktionspartner elektrisch leitend ist und als erste Elektrode verwendet wird.

Weiterhin betrifft die Erfindung eine Vorrichtung für die kontinuierliche Herstellung eines Pulvers durch Reaktion mindestens eines ersten und eines zweiten Reaktionspartners in einem Plasmalichtbogen, mit einer Zuführeinrichtung für die Zufuhr mindestens des ersten Reaktionspartners zu einer Einfüllöffnung einer Plasmakammer, die einen sich in Richtung auf einen der Einfüllöffnung gegenüberliegenden Durchlaß verjüngenden Innenraum aufweist, und mit mindestens zwei mit einem Generator verbundenen Elektroden zur Aufrechterhaltung eines Plasmalichtbogens in der Plasmakammer, wobei die erste Elektrode durch den ersten Reaktionspartner gebildet wird.

Das Plasma ist ein komplexes Medium, das man bei sehr hohen Temperaturen von beispielsweise 3000 °C erhält. Es ist sehr reaktiv, so daß die chemischen Reaktionen mit hoher Geschwindigkeit ablaufen. Plasma wird durch die Ionisation eines Gases durch elektrische Entladung von Gleichstrom, bei Hochfrequenzentladung und bei Mikrowellenentladung gebildet. Beispiele für die derzeitige Nutzung sind: Reduktion von Eisenerz durch Einspritzen von Eisenerz (Oxid) und Kohle in einen Plasmabrenner; durch Einspritzen zahlreicher Metalloxide $Cr_2O_3$, $SiO_2$, CaO, MgO ...

Plasmalichtbogen werden vor allem in der Metallurgie bei hohen Temperaturen über 1500 °C verwendet. Sie verbrauchen große Mengen an elektrischer Energie. Sie benötigen Elektroden, die nach Gebrauch als Abfall anfallen und sind insoweit umweltverschmutzend.

Zwar kann auch ein Induktionsplasma ohne Elektroden erzeugt werden, seine Leistung ist jedoch schwächer, wie dies in der Dokumentation "Les Plasmas Industriels" des französischen Ministeriums für Unterricht, Forschung und Hochschulwesen - La Documentation Française, Nr. 10, 1986 - ) beschrieben ist.

Ein Verfahren und eine Vorrichtung gemäß der angegebenen Gattung sind aus der schweizerischen Patentschrift CH 281 749 bekannt. Darin wird ein Verfahren zur Herstellung von Metall-Halogeniden beschrieben, wobei eine aus einem Gemisch von Mineralien der entsprechenden Metalle und aus Kohlenstoff bestehende Anode hergestellt wird, zwischen dieser Anode und einer Kathode aus Kohlenstoff ein Lichtbogen in einer halogenhaltigen Atmosphäre erzeugt und so das Metall-Halogenid gebildet wird.

Dabei wird die Anode verbraucht. Wegen der Inhomogenität des Anodenmaterials brennt das Plasma ungleichmäßig. Zudem ist die Herstellung der Elektrode aufwendig und teuer.

Eine Vorrichtung gemäß der angegebenen Gattung ist aus der britischen Patentschrift GB 959,027 bekannt. Die dort beschriebene Plasmaspritz-Vorrichtung weist eine Plasmakammer und eine Zuführeinrichtung für die Zuführung eines metallischen als Elektrode geschalteten Drahtes in die Plasmakammer auf. Die Zuführeinrichtung ist an ihrer Unterseite mit einem Auslaß für den Draht versehen, der koaxial zu dem nach oben, in Richtung der Zuführeinrichtung, offenen Innenraum der Plasmakammer verläuft. Der Innenraum der Plasmakammer verengt sich nach unten konisch in Richtung einer Auslaßdüse.

Weiterhin ist aus US 2,157,498 ein Verfahren und eine Vorrichtung zur Herstellung von metallischen Überzügen aus mittels eines Lichtbogens in einer Kammer verdampften Metallen bekannt. Das zu verdampfende Metall wird bevorzugt in fester Form als Draht oder als Metallseele einer zunächst durchbohrten Elektrode (beispielsweise mit einem Kohlenstoffmantel) zugeführt, die Zugabe als Metallpulver wird ebenfalls offenbart. Zur Erhöhung des Drucks in der Druckkammer wird ein Hilfsdruckmittel (Gas) eingeleitet, das auch die Abführung des erzeugten Metalldampfes über eine einen Auslaßkanal aufweisende Elektrode unterstützt.

Es hat sich gezeigt, daß bei den bekannten Vorrichtungen das in der Plasmakammer erzeugte Plasma nicht ausreichend stabilisiert werden kann.

Der vorliegenden Erfindung liegt daher einerseits die Aufgabe zugrunde, ein einfaches und preisgünstiges Verfahren für die kontinuierliche und reproduzierbare Herstellung eines Pulvers durch die Reaktion mindestens zweier Reaktionspartner in einem Plasmalichtbogen anzugeben und eine Vorrichtung hierfür bereitzustellen, die ein homogenes und gleichmäßiges Plasma und somit reproduzierbare Ergebnisse gewährleistet.

Hinsichtlich des Verfahrens wird diese Aufgabe erfindungsgemäß dadurch gelöst, daß der erste Reaktionspartner dem Plasmalichtbogen in schmelzflüssiger Form zugeführt wird, wobei der Plasmalichtbogen in einem im wesentlichen parabelförmigen Innenraum einer Plasmakammer aufrechterhalten wird.

Der erste Reaktionspartner liegt in Form einer Schmelze vor. Es ist nicht erforderlich, eine den ersten Reaktionspartner enthaltende, feste Elektrode herzustellen. Abnutzungserscheinungen oder Verschmutzungen durch Abrieb, wie sie beispielsweise bei einem Induktionsplasma zu beobachten sind, sind daher nicht zu befürchten. Die Zufuhr des ersten Reaktionpartners zu dem Plasmalichtbogen kann beispielsweise unter Ausnutzung der Schwerkraft aufgrund seines eigenen Gewichtes beruhen, indem ein Strom eines den ersten Reaktionspartner enthaltenden Materials dem

2

Plasmalichtbogen von oben zugeführt wird. Dadurch, daß der erste Reaktionspartner in fluider Form dem Plasmalichtbogen zugeführt wird, läßt sich auch eine homogene Verteilung des Reaktionspartners innerhalb eines derartigen Stromes leicht erreichen.

Der zweite Reaktionspartner kann ebenfalls in fluider Form, beispielsweise als Gas, dem Plasmalichtbogen zugeführt werden. Dadurch wird ein besonders stabiles und homogenes Plasma erhalten.

Vorteilhafterweise wird der erste Reaktionspartner als Elektrode mit negativem Potential geschaltet.

Aus Gründen der Energieeinsparung und der Stabilisierung des Plasmalichtbogens wird dieser vorteilhafterweise mit einer Energie versehen, die der freien Bildungsenthalpie der aus den Reaktionspartners herzustellenden chemischen Verbindung zuzüglich des Wärmeverlustes im Plasmalichtbogen entspricht.

Ein besonders stabiles Plasma wird erhalten, wenn der Plasmalichtbogen in einer Plasmakammer mit einem im Querschnitt gesehen im wesentlichen parabelförmigen Innenraum, der mit einer Einfüllöffnung für den ersten Reaktionspartner und mit einem der Einfüllöffnung gegenüberliegenden Durchlaß versehenen ist, aufrechterhalten wird. Über den Durchlaß wird das im Plasmalichtbogen gebildete Reaktionsprodukt aus der Plasmakammer abgegeben. Der Innenraum hat im wesentlichen die Form eines Paraboloids.

Dabei hat es sich besonders bewährt, daß der Plasmakammer mindestens der erste Reaktionspartner in einem Strahl zugeführt wird, wobei die lange Achse des parabelförmigen Innenraums der Plasmakammer koaxial zum dem Strahl verläuft.

Der Plasmalichtbogen wird vorteilhafterweise in einem der Zentren der Parabel gezündet. Das Zentrum der Parabel sollte dasjenige sein, das dem Durchlaß der Plasmakammer am nächsten liegt. Dadurch wird ein besonders stabiles Plasma erreicht.

Ein besonders stabiles Plasma wird dann erhalten, wenn der Durchlaß der Plasmakammer nach außen hin mit einem Mischrohr verlängert wird, an dessen Auslaßöffnung ein Unterdruck aufrechterhalten wird. Dabei kann das Mischrohr als sogenannte "Venturidüse" wirken.

Vorteilhafterweise wird der Unterdruck mittels einer sich an das Mischrohr anschließenden Überschalldüse aufrechterhalten.

Als erste Reaktionspartner kommen für das erfindungsgemäße Verfahren beispielsweise folgende Metalle in Frage:

Pb, Sn, Bi, Ga, Cu, In, Ag, Zn.

Als zweite Reaktionspartner kommen beispielsweise folgende Gase in Frage:

$O_2$, Luft, $Cl_2$, $N_2$ oder kohlenstoffhaltige Gase, wie beispielsweise Methan.

Besonders bewährt hat sich ein Verfahren, bei dem als erster Reaktionspartner eine Schmelze von Indium und Zinn, und als zweiter Reaktionspartner ein oxidierendes Gas eingesetzt wird.

Hinsichtlich der Vorrichtung wird die oben genannte Aufgabe ausgehend von der eingangs genannten Vorrichtung erfindungsgemäß dadurch gelöst, daß die Zuführeinrichtung ein Gefäß für die Aufnahme des ersten Reaktionspartners umfaßt, das an seiner der Einfüllöffnung der Plasmakammer zugewandten Unterseite mit einem Auslaß versehen ist, der in Richtung des im wesentlichen parabelförmigen Innenraums der Plasmakammer gerichtet ist.

Der erste Reaktionspartner wird aus dem Gefäß dem Plasmalichtbogen in schmelzflüssiger Form zugeführt. Dies ermöglicht die Durchführung des erfindungsgemäßen Verfahrens, dessen Vorteile oben erläutert sind.

Durch die bevorzugte Ausführungsform mit einem im Querschnitt im wesentlichen parabelförmigen Innenraum der Plasmakammer wird ein sowohl hinsichtlich der örtlichen Fixierung, seiner geometrischen Ausbildung als auch ein hinsichtlich seiner Energie besonders stabiler Plasmalichtbogen ermöglicht. Abgesehen von Unstetigkeiten beispielsweise im oberen oder unteren Bereich bildet der Innenraum ein Paraboloid.

Vorteilhafte Ausführungsformen der Vorrichtung ergeben sich aus den übrigen Unteransprüchen. Nachfolgend wird ein Ausführungsbeispiel der Erfindung anhand der Patentzeichnung näher erläutert. In der Zeichnung zeigen im einzelnen in schematischer Darstellung

**Fig. 1** das Prinzip der Reduktion eines Erzes durch einen Plasmalichtbogen,

**Fig. 2** das Prinzip des Einspritzens von Pulver in eine Plasmaflamme,

**Fig. 3** das Prinzip des Induktionsplasmas,

**Fig. 4** ein Ausführungsbeispiel der erfindungsgemäßen Vorrichtung in einem Gesamtüberblick,

**Fig. 5** eine vergrößerte Darstellung der in Fig. 4 dargestellten Plasmakammer,

**Fig. 6** einen Ausschnitt der in Figur 5 gezeigten Plasmakammer zum Zwecke der Erläuterung des Ionisationsabstandes und

**Fig. 7** ein weiteres Beispiel einer Plasmakammer bei einer erfindungsgemäßen Vorrichtung.

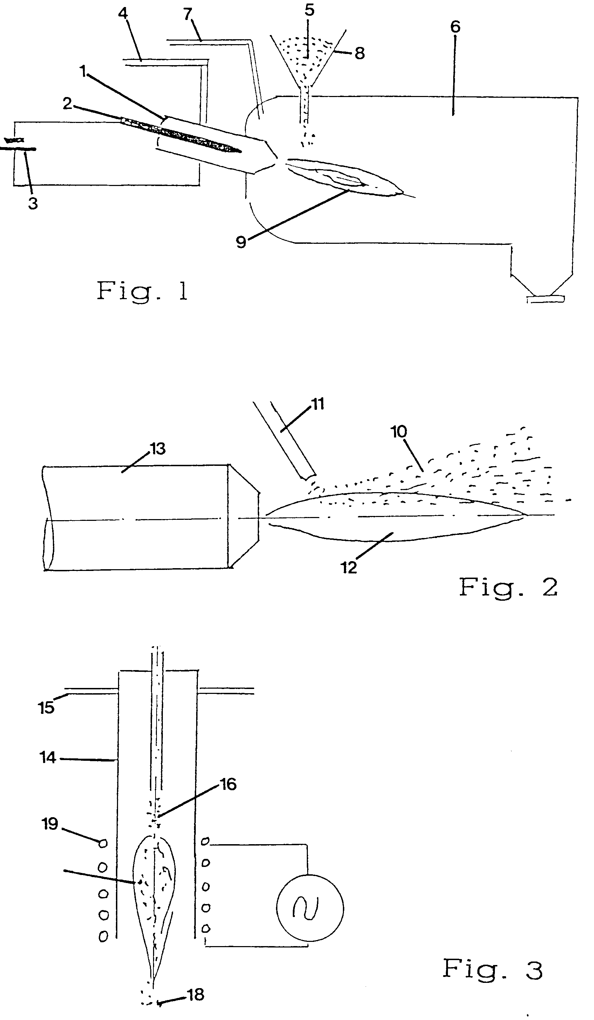

**Figur 1** veranschaulicht das Prinzip der Reduktion eines Erzes durch einen Plasmalichtbogen. Der Brenner 1 und die Elektrode 2 werden durch den von einem Generator 3 erzeugten Gleichstrom gespeist. Das Plasmagas 4 wird dem Brenner zugeführt, während ein externes Gas 7 eingeführt oder abgesaugt wird.

Das Oxid 5 oder die Bestandteile werden dem Plasmalichtbogen 9 durch einen Trichter 8 zugeführt. Die im Plasmalichtbogen 9 entstehende pulverförmige Verbindung wird in einem Behälter 6 aufgefangen.

**Figur 2** veranschaulicht ein weiteres gebräuchliches Verfahren zur Herstellung eines Pulvers in einem Plasmalichtbogen, wobei ein Ausgangspulver 10 mittels eines Zerstäubers 11 in die Flamme 11 eines Brenners 13 eingespritzt wird. Anhand der Darstellung ist ersichtlich, daß das so hergestellte Pulver nicht sehr homogen sein kann.

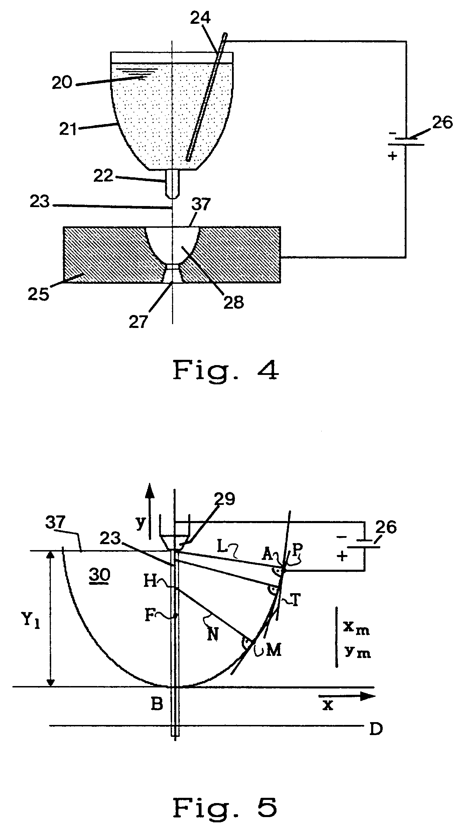

**Figur 3** veranschaulicht das Prinzip des Induktionsplasmas. In ein Quarzrohr 14 wird ein Gas 15 eingeleitet, das innerhalb einer Hochfrequenzspule 19 durch einen energiereichen Strahl 16 mit hoher Geschwindigkeit ionisiert wird und erzeugt auf diese Weise das Plasma 17, in dem das gewünschte Reaktionsprodukt 18 erzeugt wird.

**Figur 4** veranschaulicht das erfindungsgemäße Verfahren anhand eines Beispiels. Flüssiges Metall 20 befindet sich in einem Tiegel 21. Innerhalb der Metallschmelze 20 ist ein Stab 24 aus einem hochtemperaturstabilen, elektrisch leitenden Cermet angeordnet, der mit einer Spannungsquelle 26 verbunden ist. Die Metallschmelze 20 bildet so die negativ geladene Elektrode der Vorrichtung.

Der Tiegel 21 ist an seiner Unterseite mit einer kalibrierten Keramikdüse 22 versehen, aus der die Metallschmelze 20 in einem Strahl 23 austritt. Der elektrisch negativ geladene Strahl 23 fließt über die Einfüllöffnung 37 der Plasmakammer 28 an der entgegengesetzt geladenen Elektrode 25 vorbei, die mit dem Gegenpol der Spannungsquelle 26 verbunden ist. Die Plasmakammer 28 ist innerhalb der Elektrode 25 ausgebildet. In die Plasmakammer 28 wird auch der weitere oder werden auch noch weitere Reaktionspartner eingeleitet, die mit der Metallschmelze 20 innerhalb des Plasmalichtbogens zu dem gewünschten Pulver reagieren. Selbstverständlich ist das Verfahren auch für die Verwendung anderer bekannter Vorrichtungen und Verfahren zur Plasmagenerierung, wie zum Beispiel die Verwendung von Hochfrequenzstrom, geeignet.

Eine Besonderheit der Erfindung besteht darin, daß das Plasma an einem Ort verschlossen wird, der von seinem Aufbau her fest und stabil ist. Bei den bekannten Verfahren, wie beispielsweise in Figur 2 dargestellt, wird das Ausgangsmaterial, ob es nun aus einem festen Körper, aus Granulaten oder aus Pulver besteht, innerhalb des Strahles aus ionisiertem Gas oder Plasma verteilt, der mit hoher Geschwindigkeit aus dem Brenner austritt. Die Einleitung und Verweilzeit des Ausgangsmaterials in das Plasma sind kurz und zufallsbedingt.

Demgegenüber wird bei dem erfindungsgemäßen Verfahren der Strahl 23 aus Ausgangsmaterial, wie beispielsweise in der Vorrichtung gemäß Figur 4 dargestellt, in eine nach Art eines Paraboloids ausgebildete Plasmakammer 28 geleitet. Diese Kammer 28 besitzt eine für einen gegebenen Druck oder ein gegebenes Plasmagas optimierte Form. Sie geht nach unten in eine Mischdüse 27 über, die einen nach außen sich konisch erweiternden Innenraum umfaßt. Der Abstand zwischen dem Strahl 23 und der Innenwandung der Kammer 28 variiert zunächst langsam und nimmt auf dem Weg des Strahles 23 nach unten immer schneller ab. Die günstigste Form des Innenraumes der Kammer 28, die in **Figur 5** dargestellt wird, wurde durch Berechnungen herausgefunden und durch Experimente bestätigt. Es handelt sich um eine Parabel, die koaxial zum Strahl 23 des Ausgangsmaterials angeordnet ist.

In **Figur 5** ist der Strahl 23 zu erkennen, der zum Beispiel mit dem Minuspol des Generators 26 verbunden ist und der aus einer nichtleitenden Keramikdüse 29 herausfließt. Die Plasmakammer mit ihrem parabelförmigen Innenraum 30 weist eine Einfüllöffnung 37 auf, durch die der Strahl 23 in die Plasmakammer 28 bzw. deren Innenraum 30 einfließt. Außerdem wird der Plasmakammer mit parabelförmigen Innenraum 30 der zweite Reaktionspartner, beispielsweise über eine weitere (in der Figur nicht dargestellte) Öffnung in der Seitenwand des Innenraumes 30 oder über eine in die Einfüllöffnung hineinragende Düse, zugeführt. In der Figur 5 ist über dem parabelförmigen Innenraum 30 einer Plasmakammer ein xy-Koordinatensytem gelegt, wobei der Strahlverlauf innerhalb der Plasmakammer der y-Achse entspricht. Die Parabel, die durch ihr Zentrum F und ihre Leitgerade D gekennzeichnet ist, hat auf die x- und y-Achse bezogen, folgende Gleichung:

$$(P) \quad y = a\,x^2$$

wobei a eine Konstante ist.

Die parabelförmige Innenwandung der Plasmakammer 28 gemäß der Erfindung ist durch numerische Steuerung (CN) oder mit einem Formwerkzeug herstellbar.

Für den Fall eines kontinuierlichen Strahles, der nach dem Newtonschen Gesetz aufgrund seiner Geschwindigkeit und Viskosität auf einer Länge Y1 erhalten bleibt, und unter der Annahme der Ionisationsabstand in Abhängigkeit vom Gas und vom Druck innerhalb des parabelförmigen Innenraumes 30 der Plasmakammer betrage $L_i$, hat sich ein Abstand L von mindestens 2 $L_i$ zwischen dem Strahl 23 im Bereich der Keramikdüse 29 und der Innenwandung des Innenraumes 30 in diesem Bereich als ausreichend erwiesen.

$$L >= 2\,L_i.$$

Dies genügt, um die Parabel zu kennzeichnen, die eine Kurve 2. Grades ist und durch den Punkt "A" und den Eigenschnittpunkt "B" in der folgenden Formel definiert wird:

$$(P)\ y = a\,x^2.$$

Es wird also davon ausgegangen, daß "a" eine bekannte Konstante ist, deren Ermittlung für den Fachmann auf diesem Gebiet aus den oben gemachten Angaben selbstverständlich ist.

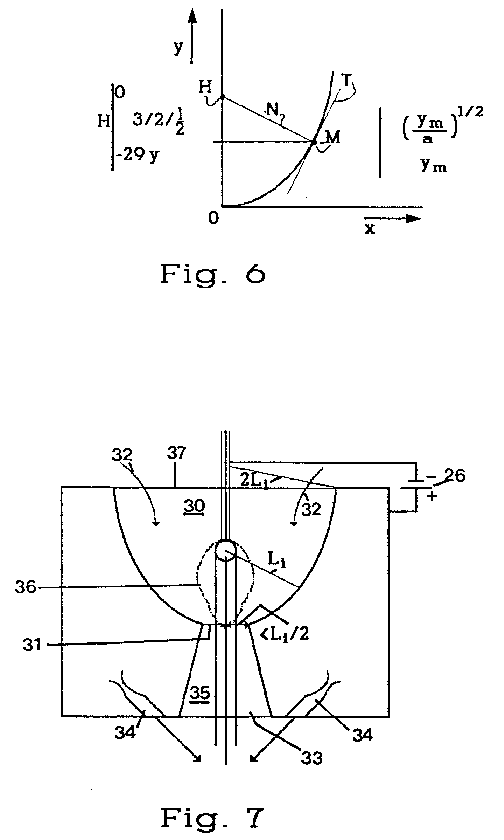

**Figur 6** veranschaulicht, daß dieser parabelförmige Innenraum 30 der Plasmakammer einen möglichst stabilen Plasmalichtbogen ergibt. In der Tat ergibt ein Punkt M (x,y) von P und seiner Tangente die Gleichung der Ableitung von P.

$$P : y = ax^2$$

$$T : y' = 2ax+b.$$

wobei

$$y = ax_m^2.$$

Der Ionisationsabstand $L_i$ entspricht der Länge HM der Normalen N zur Parabel in M minus dem Radius des Strahls, das bedeutet zum Beispiel einen konstanten Wert 1,2,3,4 mm. Die Gleichung der Normalen N wird von der Gleichung von T abgeleitet.

$$N : y = -(1/2a)x+c$$

wobei

$$y = ax_m^2$$

$$y = ax_m^2 = -(1/2a)x_m+c.$$

$$c = ax_m^2+(1/2a)x_m.$$

aber

$$x_m = (y_m/a)^{1/2}.$$

$$c = a(y_m/a)-1/2a(y_m/a)^{1/2}$$

$$c = y_m-(1/2a^{3/2})y_m.$$

$$N : y = -(1/2a)x+y_m-ky_m.$$

Berechnet werden soll der Ionisationsabstand in der Plasmakammer in bezug auf den der Plasmakammer zugeführten Strahl nach HM.

$$\begin{aligned}
HM^2 &= (y-y_m)^2+(x-x_m)^2 \\
&= [(y_m/a)^{1/2}-0]^2+[y_m^2-(-2a^{3/2}b^{1/2})]^2 \\
&= y_m/a+y_m^4+(2a^{3/2})^2y_m+2y_m^2 2a^{3/2}y_m^{1/2} \\
&= y_m^4+4a^{3/2}+y^{3/2}+(2a^3+1/a)y_m
\end{aligned}$$

der Formel

$$L^2 = y_m^4+ay_m^{3/2}+by_m$$

Diese Berechnung ist eine Bestätigung dessen, was Figur 5 und Figur 6 veranschaulichen. Dies bedeutet, daß die Innenwandung des Innenraumes 30 nahe dem Austritt des Strahles 23 aus der Keramikdüse 29 (benachbart zum Punkt A) praktisch parallel zum Strahl 23 verläuft, sich danach sehr schnell an den Strahl 23 annähert und schließlich, wie in Punkt B dargestellt, in Kontakt mit dem Strahl 23 tritt.

**Figur 7** zeigt, daß sich das Plasma an einem Punkt C niederläßt, den man günstigerweise mit dem Zentrum F (siehe Figur 5) der Parabel zusammentreffen läßt. Das Plasma verhält sich dort stabil und befindet sich im Ionisationsabstand $L_i$ von der Innenwandung des Innenraumes 30. Dieser Betriebspunkt ist besonders stabil, da sich der Elektrodenabstand oben langsam und unten schnell verkleinert.

Die Plasmakammer mit dem parabelförmigen Innenraum 30 gemäß Figur 7 hat einen oberen Durchmesser, der 2 $L_i$ entspricht. Das Plasma läßt sich mit einem Abstand zur Innenwandung des Innenraumes 30, der gleich $L_i$ ist, in C nieder. Der Innenraum 30 der Plasmakammer weist in seinem unteren Teil einen Durchlaß 31 auf, der einen Durchmesser besitzt, der kleiner ist als die Länge $L_i$. Das Einspritzen des Plasmagases, im Ausführungsbeispiel wird hierfür Luft verwendet, wird durch die Richtungspfeile 32 charakterisiert. Der Durchlaß 31 weist einen sich nach außen konisch erweiternden Verlauf auf. Im Bereich seiner Auslaßöffnung 33 wird mittels einer Ringdüse 34 ein zusätzliches Gas eingespeist, derart, daß im Bereich der Auslaßöffnung 33 ein Unterdruck erzeugt wird. Die Ringdüse 34 ist dabei als Überschalldüse gemäß einer Venturidüse ausgebildet. Der Plasmalichtbogen ist in der Figur 7 mit der Bezugsziffer 36 gekennzeichnet.

Durch diese Ausführung des Durchlasses 31 wird dieser durch eine Art konisches Mischrohr, dessen Innenbohrung in Figur 7 mit der Bezugsziffer 35 gekennzeichnet ist, verlängert. Somit steht der Durchlaß 31 mit einer Venturi-Düse und damit mit einem Bereich mit hoher Strömungsgeschwindigkeit und niedrigem Druck in Verbindung. Das Mischrohr 35 besitzt im allgemeinen einen kleinen Konizitäts-Winkel, der 7 bis 14° betragen kann.

Die Stöchiometrie des herzustellenden Pulvers kann durch eine Veränderung der Gasmenge beliebig bestimmt werden. In einer bevorzugten Verfahrensweise wird ein Mischkristallpulver aus Indium-/Zinnoxid hergestellt, bei dem der Indiumoxidanteil 90 Gew.-% und der Zinnoxidanteil 10 Gew.-% beträgt. Um ein Mischkristallpulver mit unterstöchiometrischem Sauerstoffgehalt herzustellen, wird dem Plasma ein entsprechend niedrig gehaltener Luftstrom zugeführt, der mit der Metallschmelze im Plasmalichtbogen zu dem gewünschten unterstöchiometrischen Oxid reagiert.

Die Vorrichtung gemäß der Erfindung kann auch durch Pulver oder durch Granulate gespeist werden.

Ein Beispiel für die industrielle Anwendung der Erfindung ist die ununterbrochene Herstellung von Bleioxid PbO. Zur Herstellung von 1000 kg Oxid müssen 928 kg Blei und 72 kg Sauerstoff, d.h. 101 $m^3$, verwendet werden. Des weiteren müssen 96 kcal/mol (Molgewicht von PbO = 224 g), d.h. ca. 430 000 kcal, zugeführt werden. Das flüssige Pb fließt aus einem Tiegel, dessen Boden mit einer Keramikdüse versehen ist. Es fließt mit einem Ausstoß von 1000 kg/h durch das Loch der Düse, die einen Durchmesser von 4 mm hat. Der für die Oxidation notwendige $O_2$-Strom wird in den parabelförmigen Innenraum einer Plasmakammer aus Graphit eingeleitet.

Der obere Teil der Plasmakammer kann zum Beispiel einen Durchmesser von 60 mm, der untere Teil einen Durchmesser von 12 mm haben.

Die Spannung zwischen dem Metallstrom und der Plasmakammer hat zur Folge, daß sich das Plasma in einem stabilen Achsenpunkt niederläßt. Die Plasmablase wird durch die Venturidüse angesaugt und dadurch das Oxidpulver nach unten geschleudert. Das so hergestellte Pulver fällt feinteilig und mit enger Korngrößenverteilung an.

## Patentansprüche

1. Verfahren für die kontinuierliche Herstellung eines Pulvers durch die Reaktion mindestens zweier Reaktionspartner in einem Plasmalichtbogen, bei dem ein erster und ein zweiter Reaktionspartner dem Plasmalichtbogen zugeführt werden, der mittels einer zwischen einer ersten und einer zweiten Elektrode angelegten Spannung aufrechterhalten wird, wobei mindestens der erste Reaktionspartner elektrisch leitend ist und als Elektrode verwendet wird, dadurch gekennzeichnet, daß der erste Reaktionspartner (20) dem Plasmalichtbogen (36) in schmelzflüssiger Form zugeführt wird, wobei der Plasmalichtbogen (36) in einem im wesentlichen parabelförmigen Innenraum (30) einer Plasmakammer (28) aufrechterhalten wird.

2. Verfahren nach Anspruch 1, dadurch gekennzeichnet, daß der erste Reaktionspartner (20) als Elektrode mit negativem Potential geschaltet wird.

3. Verfahren nach Anspruch 1 oder 2, dadurch gekennzeichnet, daß der Plasmalichtbogen (36) mit einer Energie versehen wird, die der freien Bildungsenthalpie des herzustellenden Pulvers zuzüglich des Wärmeverlustes im Plasmalichtbogen (36) entspricht.

4. Verfahren nach einem der vorherigen Ansprüche, dadurch gekennzeichnet, daß der Plasmalichtbogen (36) in einem der Zentren (F) der Parabel gezündet wird.

5. Verfahren nach einem der vorhergehenden Ansprüche, dadurch gekennzeichnet, daß der Plasmakammer (28) mindestens der erste Reaktionspartner (20) in einem Strahl (23) zugeführt wird, wobei die lange Achse des parabelförmigen Innenraums (30) der Plasmakammer (28) koaxial zu dem Strahl (23) verläuft.

6. Verfahren nach einem der vorhergehenden Ansprüche, dadurch gekennzeichnet, daß als erster Reaktionspartner (20) eine Schmelze von Zinn und Indium und als zweiter Reaktionspartner ein sauerstoffhaltiges Gas eingesetzt wird.

7. Vorrichtung für die kontinuierliche Herstellung eines Pulvers durch Reaktion mindestens eines ersten und eines zweiten Reaktionspartners in einem Plasmalichtbogen, mit einer Zuführeinrichtung für die Zufuhr mindestens des ersten Reaktionspartners zu einer Einfüllöffnung der Plasmakammer, die einen sich in Richtung auf einen der Einfüllöffnung gegenüberliegenden Durchlaß verjüngenden parabelförmigen Innenraum aufweist, und mindestens zwei mit einem Generator verbundenen Elektroden zur Aufrechterhaltung eines Plasmalichtbogens in der Plasmakammer, wobei die erste Elektrode durch den ersten Reaktionspartner gebildet wird, wobei die Zuführeinrichtung ein Gefäß (21) für die Aufnahme des ersten Reaktionspartners (20) umfaßt, das an seiner der Einfüllöffnung (37) der Plasmakammer (28) zugewandten Unterseite mit einem Auslaß (22) versehen ist, der in Richtung des im wesentlichen parabelförmigen Innenraums (30) der Plasmakammer (28) gerichtet ist.

8. Vorrichtung nach einem der Ansprüche 7, dadurch gekennzeichnet, daß der Durchlaß (31) der Plasmakammer (28) nach außen hin mit einem Mischrohr (27; 35) verlängert wird, dessen Innenquerschnitt sich von der Plasmakammer (28) in Richtung auf seine Auslaßöffnung (33) gesehen konisch erweitert, wodurch an der Auslaßöffnung (33) ein Unterdruck aufgebaut wird.

9. Vorrichtung nach Anspruch 8, dadurch gekennzeichnet, daß sich an das Mischrohr (27; 35) eine Überschalldüse (34) anschließt, die zur Aufrechterhaltung des Unterdrucks dient.

## Claims

1. A method for the continuous production of a powder through the reaction of at least two reaction partners in a plasma arc, in which a first and a second reaction partner are supplied to the plasma arc, which is maintained by means of a voltage applied between a first and a second electrode, at least the first reaction partner being electrically conductive and being used as electrode, characterised in that the first reaction partner (20) is supplied to the plasma arc (36) in a molten form, the plasma arc (36) being maintained in a substantially parabolic interior (30) of a plasma chamber (28).

2. The method according to Claim 1, characterised in that the first reaction partner (20) is connected as electrode with negative potential.

3. The method according to Claim 1 or 2, characterised in that the plasma arc (36) is provided with an energy which corresponds to the free formation enthalpy of the powder which is to be produced including the heat loss in the plasma arc (36).

4. The method according to any of the preceding claims, characterised in that the plasma arc (36) is ignited in one of the centres (F) of the parabola.

5. The method according to any of the preceding claims, characterised in that at least the first reaction partner (20) is supplied to the plasma chamber (28) in a jet (23), the long axis of the parabolic interior (30) of the plasma chamber (28) running coaxially to the jet (23).

6. The method according to any of the preceding claims, characterised in that as first reaction partner (20) a melt of tin and indium is used and as second reaction partner a gas containing oxygen is used.

7. A device for the continuous production of a powder through reaction at least of a first and of a second reaction partner in a plasma arc, with a supply arrangement for the supply at least of the first reaction partner to a filling opening of the plasma chamber, which has a parabolic interior narrowing in the direction of a passage lying opposite the filling opening, and at least two electrodes connected with a generator to maintain a plasma arc in the plasma chamber, the first electrode being formed by the first reaction partner, the supply arrangement comprising a vessel (21) to receive the first recation partner (20), which on its underside facing the filling opening (37) of the plasma chamber (28) is provided with an outlet (22) which is directed in the direction of the substantially parabolic interior (30) of the plasma chamber (28).

8.  The device according to Claim 7, characterised in that the passage (31) of the plasma chamber (28) is extended towards the exterior with a mixing tube (27; 35), the internal cross-section of which widens conically from the plasma chamber (28) viewed in the direction of its outlet opening (33), whereby a vacuum is built up at the outlet opening (33).

9.  The device according to Claim 8, characterised in that adjoining the mixing tube (27; 35) is an ultrasonic nozzle (34), which serves to maintain the vacuum.

## Revendications

1.  Procédé pour la préparation continue d'une poudre par la réaction d'au moins deux partenaires réactionnels dans un arc électrique à plasma, dans lequel un premier et un second partenaire réactionnel sont introduits dans l'arc électrique à plasma, lequel est maintenu à l'aide d'une tension appliquée entre une première et une seconde électrode, au moins le premier partenaire réactionnel étant électriquement conducteur et utilisé comme électrode, caractérisé en ce que le premier partenaire réactionnel (20) est introduit dans l'arc électrique à plasma (36) dans une forme liquide à l'état de fusion, l'arc électrique à plasma (36) étant maintenu dans un espace interne essentiellement en forme de parabole (30) d'une chambre à plasma (28).

2.  Procédé selon la revendication 1, caractérisé en ce que le premier partenaire réactionnel (20) est raccordé comme électrode avec un potentiel négatif.

3.  Procédé selon la revendication 1 ou 2, caractérisé en ce que l'arc électrique à plasma (36) est muni d'une énergie qui correspond à l'enthalpie libre de formation de la poudre à préparer additionnée des pertes thermiques dans l'arc électrique à plasma (36).

4.  Procédé selon l'une quelconque des revendications précédentes, caractérisé en ce que l'arc électrique à plasma (36) est allumé à l'un des centres (F) de la parabole.

5.  Procédé selon l'une quelconque des revendications précédentes, caractérisé en ce que l'on introduit dans la chambre à plasma (28) au moins le premier partenaire réactionnel (20) dans un jet (23), l'axe longitudinal de l'espace interne en forme de parabole (30) de la chambre à plasma (28) étant coaxial au jet (23).

6.  Procédé selon l'une quelconque des revendications précédentes, caractérisé en ce que l'on utilise comme premier partenaire réactionnel (20) une masse à l'état de fusion d'étain et d'indium et comme second partenaire un gaz contenant de l'oxygène.

7.  Dispositif pour la préparation continue d'une poudre par réaction d'au moins un premier et un second partenaire réactionnel dans un arc électrique à plasma avec un dispositif d'alimentation pour l'introduction d'au moins le premier partenaire réactionnel vers une ouverture de remplissage de la chambre à plasma, laquelle présente un espace interne en forme de parabole se rétrécissant en direction d'un passage opposé à l'ouverture de remplissage, et au moins deux électrodes raccordées à un générateur pour maintenir un arc électrique à plasma dans la chambre à plasma, la première électrode étant formée par le premier partenaire réactionnel, le dispositif d'alimentation comprenant une cuve (21) pour la prise du premier partenaire réactionnel (20), laquelle est munie sur son côté inférieur faisant face à l'ouverture de remplissage (37) de la chambre à plasma (28) d'une sortie (22) qui se trouve dans la direction de l'espace interne essentiellement en forme de parabole (30) de la chambre à plasma (28).

8.  Dispositif selon la revendication 7, caractérisé en ce que le passage (31) de la chambre à plasma (28) est prolongé vers l'extérieur avec un tube mélangeur (27 ; 35) dont la section transversale interne s'élargit coniquement en partant de la chambre à plasma (28) dans la direction de son ouverture de sortie (33), une sous-pression est par là constituée sur l'ouverture de sortie (33).

9.  Dispositif selon la revendication 8, caractérisé en ce qu'une buse à fréquence ultrasonique (34) est raccordée au tube mélangeur (27 ; 35), laquelle sert à maintenir la sous-pression.

Fig. 1

Fig. 2

Fig. 3

Fig. 4

Fig. 5

Fig. 6

Fig. 7